# EUROPÄISCHE PATENTSCHRIFT

(11) **EP 2 627 842 B1**
(45) Veröffentlichungstag und Bekanntmachung des Hinweises auf die Patenterteilung: **05.11.2014**
(21) Anmeldenummer: 11813670.4
(22) Anmeldetag: 27.09.2011
(51) Int. Cl.: E05B 35/00, H01H 27/00, B23P 15/00

(54) **VERFAHREN ZUR KODIERUNG EINES SCHLOSSES**
METHOD FOR CODING A LOCK
PROCÉDÉ DE CODAGE D'UNE SERRURE

(30) Priorität: 11.10.2010 DE 102010038105
(43) Veröffentlichungstag der Anmeldung: 21.08.2013
(73) Patentinhaber: Haake, André, 48703 Stadtlohn (DE); Haake, Oliver, 48703 Stadtlohn (DE); Haake, Patrick, 48691 Vreden (DE)
(72) Erfinder: Haake, André, 48703 Stadtlohn (DE); Haake, Oliver, 48703 Stadtlohn (DE); Haake, Patrick, 48691 Vreden (DE)
(74) Vertreter: Habbel, Ludwig
(86) Internationale Anmeldenummer: PCT/DE2011/075235
(87) Internationale Veröffentlichungsnummer: WO 2012/062305

(56) Entgegenhaltungen:
- EP-A1- 1 602 792
- DE-C- 671 543
- FR-A1- 2 798 690
- US-A- 5 289 709
- Rasch-Metalle GMBH & Co. KG: "Lagerprogramm & Service", Bielefeld, Deutschland , November 2009 (2009-11), XP002678393, Gefunden im Internet: URL:http://www.rasch-metalle.de/files/de/R M_Lagerprogramm&Service.pdf [gefunden am 2012-06-20]

## Beschreibung

Die Erfindung bezieht sich auf ein Verfahren zur Kodierung eines Schlüssels und eines Schließstempels für ein Schloss für ein Verriegelungssystem und auf das zur Durchführung dieses Verfahrens zum Einsatz kommende Rohteil.

Zum Beispiel wird bei einem Schlüsseltransfersystem der Schließstempel in das Schloss des Schlüsseltransfersystems eingebaut und ist damit z. B. ein integraler Bestandteil, wobei zum Betätigen des Schlosses und damit des Schließstempels ein Schlüssel erforderlich ist. Die einzelnen Schlösser weisen dabei eine zwischen Schließstempel und Schlüssel vorhandene Kodierung auf, so dass nur bei übereinstimmender Kodierung die Betätigung des eigentlichen Schlosses möglich ist. Im Normalfall greift der Schlüssel in den Schließstempel des Schlosses ein und bildet so eine formschlüssige Einheit. Der Schließstempel selbst wirkt z. B. mit einer Blockiereinrichtung der Zuhaltungseinrichtung zusammen oder über einen integrierten Vierkant o. dgl. z. B. mit einem elektrischen Schalter.

Aus der EP 1 602 792 A1, US 5 289 709 A, FR 2 798 690 A sowie der DE 671 543 C ist jeweils ein Verfahren zur Kodierung eines Schlüsselteils und eines Schließstempels für ein Schloss eines Verriegelungssystem bekannt. Auf unterschiedliche Arten werden dabei die komplementären Geometrien des Schlüsselteils einerseits und des Schließstempels andererseits erzeugt.

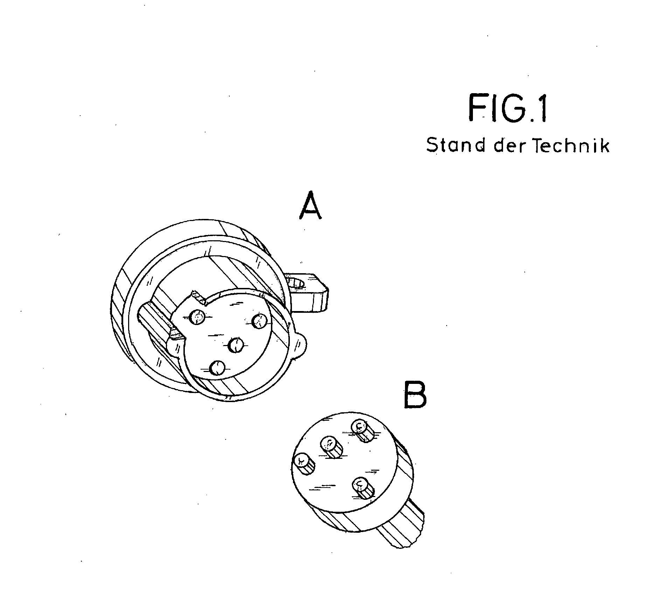

Aus der Praxis ist zudem ein Stand der Technik bekannt (siehe Fig. 1 der beiliegenden Zeichnungen), bei welchem die Kodierung aus einer Kombination aus Stiften und Bohrungen besteht. Der Schlüssel weist eine Vielzahl von Bohrungen in einer bestimmten Anordnung auf und der Schließstempel wird mit einer gleichen Anzahl von Stiften auch in gleicher Anordnung wie bei dem Schließstempel versehen, die bei übereinstimmender Kodierung in die Bohrungen des Schlüssels eingreifen können. Der Schlüssel kann dann soweit eingeführt werden, dass das Schloss betätigt werden kann. Bei nicht korrespondierendem Lochbild und Stiftbild ist eine Betätigung des Schlüssels und damit des Schlosses nicht möglich.

Im Stand der Technik ist es auch bekannt, an Stelle von Stiften und Bohrungen ausgefräste Buchstaben oder Kombinationen von Buchstaben vorzusehen. Auch sind gefräste oder gegossene Konturen im Einsatz.

Kennzeichnend für den Stand der Technik und die dort bekannten Kodierungen ist, dass sie für Schlüssel und Schließstempel getrennt voneinander hergestellt werden müssen. Das bedeutet, der Schlüssel wird durch Bearbeitung kodiert, z. B. Herstellen der Bohrungen und der Schließstempel wird durch Bearbeiten, nämlich Herstellen von Bohrungen und Einpressen der Stifte entsprechend angepasst.

Es ist offensichtlich, dass die Herstellung dieser bekannten Kodierungen aufwendig ist und dass die Anzahl der Kodierungen begrenzt ist.

Der Erfindung liegt die Aufgabe zugrunde, ein Verfahren vorzuschlagen, bei welchem in einem vereinfachten Verfahren mit wenigen Arbeitsgängen die Kodierung hergestellt wird.

Zur Lösung dieser Aufgabe wird vorgeschlagen, dass ein z. B. bolzenartiges Rohteil zum Einsatz kommt, das durch einen quer zur Längsachse und in Richtung der Längsachse des Rohteiles geführten Trennschnitt in zwei Teile getrennt wird, wobei anschließend die beiden Teile zum Schlüssel und Schließstempel nachbearbeitet werden oder als Kodierscheiben mit dem Schlüssel und dem Schließstempel verbunden werden.

Die durch den Trennschnitt oder das Trennverfahren erzielte Trennebene zwischen den beiden Teilen des Rohteiles bildet automatisch die Kodierung.

Hierbei kann so vorgegangen werden, dass das Trennverfahren quer zur Längsachse und gleichzeitig dabei in Richtung der Längsachse des Rohteiles geführt wird, so dass also eine wellenförmige Trennebene erzielt wird.

In gleicher Weise ist es möglich, einen parallelen oder radialen Trennschnitt vorzusehen.

Zusammenfassend ist also festzustellen, dass im Einzelnen die Kontur, die Ausrichtung der Kontur und die radiale Ausrichtung der Kontur zur Längsachse des Rohteiles die maximal mögliche Anzahl der Kodierungen ergibt.

Die so erzielten Kodierscheiben werden mit dem eigentlichen Schlüssel und dem Schließstempel verbunden und der erzielte und kodierte Schließstempel wird im Schloss eingebaut.

Gemäß einem wesentlichen Merkmal der Erfindung ist es auch möglich, anstatt am Schlüssel und am Schließstempel die Kodierung vorzusehen, ein gesondertes Bauteil einzusetzen, aus dem dann durch den die Kodierung schaffenden Trennschnitt zwei Scheiben geschaffen werden, von denen die eine Scheibe mit dem Schlüsselteil und die andere Scheibe mit dem Schließstempelteil verbunden werden kann.

Wird die Kodierung am Schlüssel und am Schließstempel vorgesehen, muss vor dem Zusammenbau der Verriegelungseinrichtung die Kodierung des Schlüssels und des Schließstempels erfolgen. Das bedingt, dass nur auftragsbezogen gefertigt werden kann, was die Herstellung dieses Bauteiles sehr zeitaufwendig macht.

Wird die Kodierung aber an zwei Kodierscheiben vorgesehen, können diese Kodierscheiben mit dem Schlüssel und dem Schließstempel verbunden werden, so dass die Möglichkeit besteht, die Verbindung der Kodierscheiben als letzten Arbeitsschritt bei der Herstellung der Komponenten vorzusehen. Dann ist es möglich, die Bauteile des Schlosses, d. h. den Schlüssel, die Verriegelungseinrichtung, die Zuhalteeinrichtung, das Schloss u. dgl. herzustellen und vorzufertigen und erst im Auftragsfall die Kodierscheiben herzustellen, die dann mit Schließstempel und Schlüssel verbunden werden.

Die Verbindung der Kodierscheiben mit dem Schlüssel und dem Schließstempel kann auf verschiedenste Art erfolgen, nämlich form-, material- und kraftschlüssig. Hier kann eine Pressverbindung, eine Nietverbindung, eine Schraubverbindung oder ein Clipsverfahren Anwendung finden und es können Mittel, wie Sicherungsriegel o. dgl. eingesetzt werden.

Gemäß einer Ausführungsform der Erfindung ist weiterhin vorgesehen, dass in den Schlüssel ein den Schließstempel durchquerender Schlüsselbolzen mit Schlüsselbart eingesetzt wird, so dass der Schlüssel im betätigten Zustand, beispielsweise im gedrehten Zustand im Schließstempel oder im Schloss gegen axiales Herausziehen gesichert ist.

Das Rohteil kann aus Metall oder Kunststoff bestehen und beispielsweise ein Feingussteil oder ein zylindrisches oder polygonales Stabmaterial sein.

Als Trennverfahren kommt z. B. ein Lasertrennverfahren oder ein Wasserstrahl-Trennverfahren in Frage, wobei hierauf aber die Erfindung keinesfalls begrenzt ist.

Zusammenfassend ist also festzustellen, dass die Kodierung von Schlüssel und Schließstempel bzw. einem Rohteil, das zwischen Schlüssel und Schließstempel eingesetzt werden kann in einem Arbeitsgang an einem Ausgangsbauteil erfolgt. Toleranzen müssen nicht mehr berücksichtigt werden, da beide Kodierungen immer zusammenpassen, da sie aus einem Teil gefertigt sind.

Das neue Verfahren ermöglicht eine sehr hohe Anzahl von Kodierungen und die Kodierungen bilden Teile, die aus einem Werkstoff bestehen, so dass damit Korrosionen weitgehend vermieden werden.

Die Herstellung der Kodierung ist auch bei mechanisch schwer zu bearbeitenden Werkstoffen möglich und aufgrund des gewählten Trennverfahrens ist eine preiswerte Herstellung möglich.

Schließlich ist noch darauf hinzuweisen, dass bei dem neuen Verfahren weder Verschnitt noch Abfall anfällt.

Ein Ausführungsbeispiel der Erfindung wird nachfolgend anhand der Zeichnungen erläutert.

In den Zeichnungen zeigt
- Fig. 1: den Stand der Technik,
- Fig. 2: ein Rohteil
- Fig. 3: die beiden durch ein Trennverfahren aus dem Rohteil hergestellten Einzelteile,
- Fig. 4: verschiedene Kodiermöglichkeiten,
- Fig. 5: einen gemäß dem erfindungsgemäßen Verfahren hergestellten Schlüssel und Schließstempel und
- Fig. 6: eine Ansicht in Richtung des Pfeils A auf die Anordnung gemäß Fig. 5 und in
- Fig. 7: den Einsatz von Kodierscheiben.

In Fig. 1, die den Stand der Technik zeigt, ist ein Schlüssel A und ein Schließstempel B dargestellt, wobei der Schlüssel A mit Bohrungen versehen ist, in die auf der Oberseite des Schließstempels B angeordnete Stifte eingreifen können. Durch eine bestimmte Anordnung der Stellung der Stifte und der Bohrungen ist also die Kodierung erreicht. Es ist offensichtlich, dass eine Bearbeitung erforderlich ist, bei der der Schlüssel oder das Schlüsselteil mit entsprechenden Bohrungen versehen wird und der Schließstempel mit den entsprechenden in Bohrungen eingesetzten und eingepressten Stiften. Diese Arbeitsweise hat den Nachteil, dass Toleranzen entstehen, dass unter Umständen verschiedene Werkstoffe zum Einsatz kommen, insbesondere für die Auswahl der in den Schließstempel B eingesetzten Stifte und dass das Verfahren aufwendig ist.

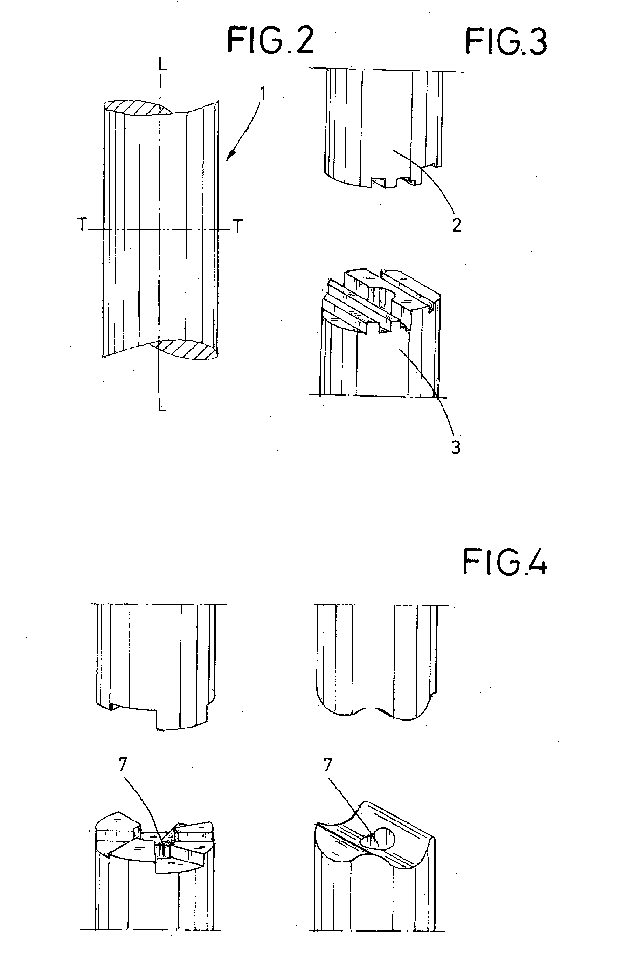

In Fig. 2 ist ein Rohteil 1 dargestellt, das z. B. durch einen zylindrischen Bolzen gebildet wird und als Ausgang für die Herstellung eines Schließstempels 3 und eines Schlüssels 2 dient.

Gemäß Fig. 3 ist das Rohteil 1 durch ein Trennverfahren in zwei Teile geteilt, wobei diese beiden Teile den Schlüssel 2 und den Schließstempel 3 bilden, wobei das Trennverfahren selbst die Kodierungen bilden wird. Das Trennverfahren kann dabei so geführt werden, dass die Trennebene T-T quer zur Längsachse des Rohteiles 1 und in Richtung der Längsachse L-L des Rohteiles 1 erfolgt, so wie dies in Fig. 4 dargestellt ist oder der Trennschnitt wird sternenförmig radial geführt, so dass das Rohteil 1 kuchenstückförmig durchtrennt wird. Bei diesem Verfahren muss die Mittelachse des Werkstückes fokussiert werden und der Schließstempel 3 muss zwingend mit einer Mittelbohrung 7 als Auslauf versehen sein.

Wie ersichtlich ergeben sich durch die Wahl des Trennverfahrens eckige oder abgerundete Konturen, wobei die eckigen Konturen sich sehr gut zum Übertragen des Drehmomentes zwischen Schlüssel und Schließstempel eignen. Die abgerundeten Konturen haben den Vorteil, dass sie weniger zur Verschmutzung neigen und Verletzungsgefahren geringer sind.

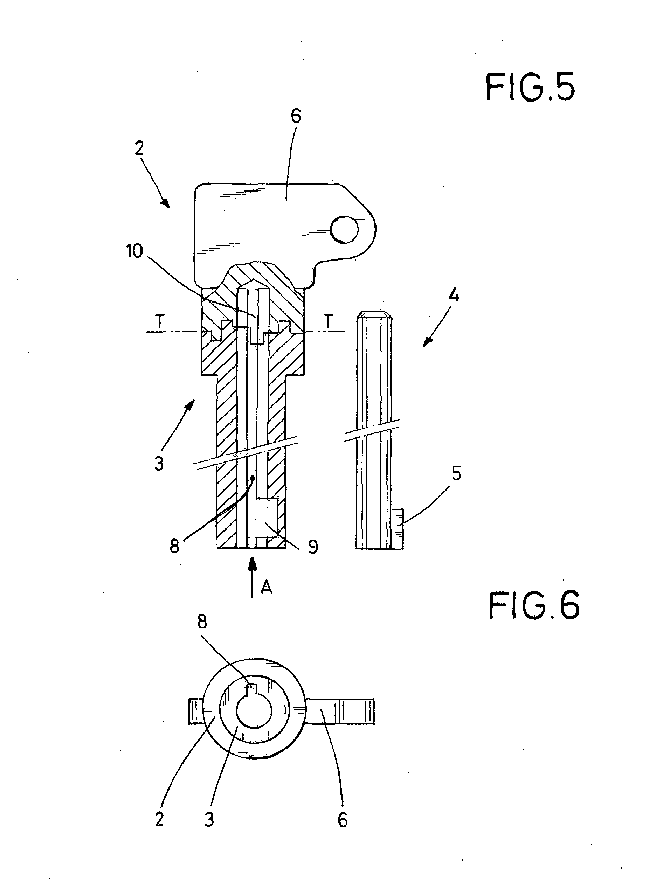

Die Verwendung der gerundeten Konturen hat den Nachteil, dass man zusätzlich ein Funktionselement für die Übertragung des Drehmomentes von Schlüssel 2 auf Schließstempel 3 benötigt. Hierzu eignet sich beispielsweise der in Fig. 5 erkennbare Schlüsselbolzen 4 mit Schlüsselbart 5.

Die eckigen Konturen haben also den Vorteil, dass sie sowohl die Kodierung schaffen, als auch dass notwendige Drehmoment übertragen können.

Gemäß Fig. 5 und 6 ist ein einsatzfertiges Bauteil erkennbar, das aus einem Schlüsselgriff 6 besteht, der mit dem Schlüssel 2 materialeinheitlich hergestellt ist oder am Schlüssel 2 fest verankert ist. Zwischen dem Schlüssel 2 und dem eigentlichen Schließstempel 3 besteht eine Trennebene T-T, die die Kodierung aufweist und die nach einem der vorbeschriebenen Verfahren hergestellt ist. Außerdem wird in den Schlüssel 2 in eine nach unten offene Bohrung 10 der Schlüsselbolzen 4 eingesetzt, der einen Schlüsselbart 5 aufweist, wobei dieser Schlüsselbart 5 in eine entsprechende Nut 8 des Schließstempels 3 eingreift, so dass eine sehr drehfeste Verbindung zur Übertragung des Drehmomentes zwischen Schlüssel 2 und Schließstempel 3 besteht. Außerdem rastet der Bart 5 durch Drehen in die Ausnehmung 9 ein, so dass der Schlüsselbolzen 4 sicher gehalten ist.

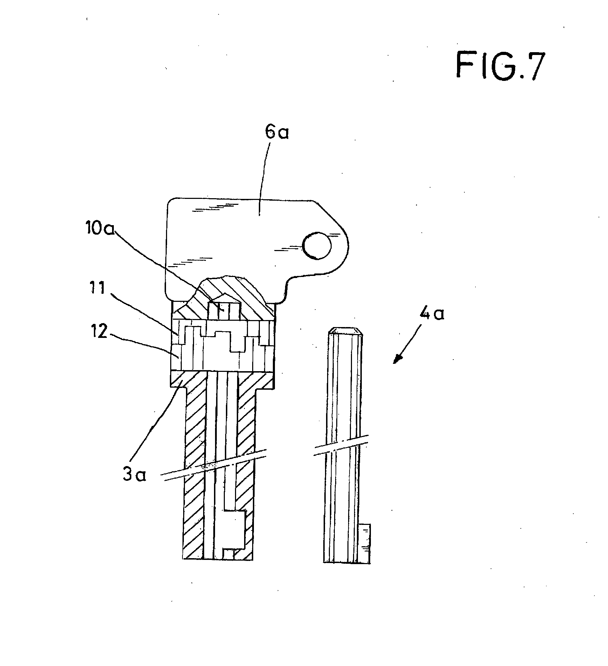

Fig. 7 zeigt die mögliche Ausführungsform mit Kodierscheiben, die in einem zum Stand der Technik gehörenden Verfahren, z. B. durch ein Clipsverfahren, eine Pressverbindung, eine Nietverbindung, eine Schraubverbindung oder mittels Sicherungsringen usw. mit dem Schlüssel einerseits und dem Schließstempel andererseits verbunden sind.

In Fig. 7 ist der eigentliche Schlüssel mit 6a bezeichnet, die diesem Schlüssel 6a zugeordnete Kodierscheibe 11 und der Schließstempel 3a, mit der ihm zugeordneten Kodierscheibe 12 bezeichnet. Der Schließstempel 3a, die Kodierscheiben 11 und 12 sowie der eigentliche Schlüssel 6a weisen eine durchgehende Bohrung 10a auf, in die, wie vorbeschrieben, ein Schlüsselbolzen 4a eingesetzt werden kann.

Diese Ausführungsform mit Kodierscheiben 11 und 12 hat den Vorteil, dass nunmehr die Möglichkeit besteht, dass die die Schließvorrichtung bildenden Komponenten, nämlich Schlüssel, Verriegelungseinrichtung, Zuhalteeinrichtung, Schlosselemente oder Schalteinrichtung, vorgefertigt werden können, und dass erst im Auftragsfall die Kodierscheiben 11 und 12 angefertigt werden, die dann mit den übrigen Komponenten verbunden werden müssen. Im Auftragsfall wird also nur die Kodierung hergestellt, während die übrigen Teile vorgefertigt werden können.

## Patentansprüche

1. Verfahren zur Kodierung eines Schlüsselteils und eines Schließstempels für ein Schloss für ein Verriegelungssystem,
**dadurch gekennzeichnet, dass** ein Rohteil (1) durch einen quer zur Längsachse (L-L) und in Richtung der Längsachse (L-L) des Rohteiles (1) geführten Trennschnitt in zwei Teile getrennt wird und die beiden Teile anschließend zum Schlüssel (2) und Schließstempel (3) nachbearbeitet werden.

2. Verfahren zur Kodierung eines Schlüssels und eines Schließstempels für ein Schloss für ein Verriegelungssystem,
**dadurch gekennzeichnet, dass** ein Rohteil (1) durch einen quer zur Längsachse (L-L) und in Richtung der Längsachse (L-L) des Rohteiles (1) geführten Trennschnitt in zwei Teile getrennt wird und die beiden Teile anschließend als Kodierscheiben (11, 12) mit dem Schlüssel (6a) und dem Schließstempel (3a) verbunden werden.

3. Verfahren nach Anspruch 1 oder 2,
**dadurch gekennzeichnet, dass** der Trennschnitt quer zur Längsachse (L-L) und dabei gleichzeitig in Richtung der Längsachse (L-L) des Rohteiles (1) geführt wird.

4. Verfahren nach Anspruch 1 oder 2,
**dadurch gekennzeichnet,**
**dass** das Rohteil (1) bolzenartig ausgebildet ist.

5. Verfahren nach Anspruch 1 oder 2,
**dadurch gekennzeichnet, dass** in den Schlüssel (2, 6a) oder den Schließstempel (3, 3a) ein den Schließstempel (3, 3a) durchquerender Schlüsselbolzen (4, 4a) mit Schlüsselbart (5) eingesetzt wird.

6. Verfahren nach Anspruch 1 oder 2,
**dadurch gekennzeichnet, dass** als Trennverfahren ein Lasertrennverfahren angewendet wird.

7. Verfahren nach Anspruch 1, 2 oder 3,
**dadurch gekennzeichnet, dass** als Trennverfahren ein Wasserstrahl-Trennverfahren Anwendung findet.

8. Verfahren nach Anspruch 1, 2 oder 3,
**dadurch gekennzeichnet, dass** ein Rohteil (1) aus Metall verwendet wird.

9. Verfahren nach Anspruch 1, 2 oder 3,
**dadurch gekennzeichnet, dass** ein Rohteil (1) aus Kunststoff verwendet wird.

10. Verfahren nach Anspruch 1, 2 oder 3,
**dadurch gekennzeichnet, dass** als Rohteil (1) ein Feingussteil zum Einsatz kommt.

11. Verfahren nach Anspruch 1, 2 oder 3,
**dadurch gekennzeichnet, dass** als Rohteil (1) ein Stabmaterial zum Einsatz kommt.

## Claims

1. Process for coding part of a key and a key stamp for a lock for a locking system, **characterised in that** a blank (1) is divided into two parts by a cut at right angles to the lengthwise axis (L-L) and in the direction of the lengthwise axis (L-L) of the blank (1) and the two parts are then machined to form the key (2) and the locking stamp (3).

2. Process for coding a key and a locking stamp for a lock for a locking system, **characterised in that** a blank (1) is divided into two parts by a cut at right angles to the lengthwise axis (L-L) and in the direction of the lengthwise axis (L-L) of the blank (1), and the two parts are then joined as coding disks (11, 12) to the key (6a) and locking stamp (3a).

3. Process in accordance with claim 1 or claim 2, **characterised in that** the cut at right angles to the lengthwise axis (L-L) is executed at the same time as the cut in the direction of the lengthwise axis (L-L) of the blank (1).

4. Process in accordance with claim 1 or claim 2, **characterised in that** the blank (1) is formed as a bolt.

5. Process in accordance with claim 1 or claim 2, **characterised in that** a key pin (4, 4a) with key web (5) which passes through the locking stamp (3, 3a) is inserted into the key (2, 6a) or the locking stamp (3, 3a).

6. Process in accordance with claim 1 or claim 2, **characterised in that** a laser process is used as the cutting process.

7. Process in accordance with claim 1, claim 2 or claim 3, **characterised in that** a water-jet process is used as the cutting process.

8. Process in accordance with claim 1 or claim 2 or claim 3, **characterised in that** a blank (1) of metal is used.

9. Process in accordance with claim 1 or claim 2 or claim 3, **characterised in that** a blank (1) of plastic material is used.

10. Process in accordance with claim 1 or claim 2 or claim 3, **characterised in that** a blank (1) made by investment casting is used.

11. Process in accordance with claim 1 or claim 2 or claim 3, **characterised in that** a blank (1) made of rod material is used.

## Revendications

1. Procédé pour coder une partie de clé et une matrice de clé, pour une serrure destinée à un système de verrouillage, **caractérisé en ce qu'**une pièce brute (1) est sectionnée en deux parties par une opération de coupe transversalement à l'axe longitudinal (L-L) et en direction de l'axe longitudinal (L-L) de la pièce brute (1), et que les deux pièces sont ensuite retouchées sur la clé (2) et sur le piston de fermeture (3).

2. Procédé pour coder une clé et un piston de fermeture, pour une serrure destinée à un système de verrouillage, **caractérisé en ce qu'**une pièce brute (1) est sectionnée en deux parties par une opération de coupe transversalement à l'axe longitudinal (L-L) et en direction de l'axe longitudinal (L-L) de la pièce brute (1), et **en ce que** les deux pièces sont ensuite reliées, comme disques de codage (11, 12), avec la clé (6a) et le piston de fermeture (3a).

3. Procédé selon la revendication 1 ou 2, **caractérisé en ce que** l'opération de coupe est guidée transversalement à l'axe longitudinal (L-L) et simultanément en direction de l'axe longitudinal (L-L) de la pièce brute (1).

4. Procédé selon la revendication 1 ou 2, **caractérisé en ce que** la pièce brute (1) est configurée en goujon.

5. Procédé selon la revendication 1 ou 2, **caractérisé en ce que** dans la clé (2, 6a) ou dans le piston de fermeture (3, 3a) est mis en place un goujon (4, 4a) traversant le piston de fermeture (3, 3a) et muni d'un panneton (5).

6. Procédé selon la revendication 1 ou 2, **caractérisé en ce que** le procédé de sectionnement utilisé est un procédé de sectionnement au laser.

7. Procédé selon la revendication 1, 2 ou 3, **caractérisé en ce que** le procédé de sectionnement utilisé est un procédé de sectionnement au jet d'eau.

8. Procédé selon la revendication 1, 2 ou 3, **caractérisé en ce qu'**est utilisée une pièce brute (1) en métal.

9. Procédé selon la revendication 1, 2 ou 3, **caractérisé en ce qu'**est utilisée une pièce brute (1) en matière plastique.

10. Procédé selon la revendication 1, 2 ou 3, **caractérisé en ce qu'**entre en oeuvre, comme pièce brute (1), une pièce moulée de précision.

11. Procédé selon la revendication 1, 2 ou 3, **caractérisée en ce qu'**entre oeuvre, comme pièce brute (1), un matériau en barre.
